(19) Europäisches Patentamt

European Patent Office

Office européen des brevets

(11) **EP 4 642 026 A1**

(12) **EUROPEAN PATENT APPLICATION**

(43) Date of publication:
**29.10.2025 Bulletin 2025/44**

(21) Application number: **24172741.1**

(22) Date of filing: **26.04.2024**

(51) International Patent Classification (IPC):
**H04N 19/105** (2014.01)   **H04N 19/593** (2014.01)
**H04N 19/52** (2014.01)   **H04N 19/176** (2014.01)

(52) Cooperative Patent Classification (CPC):
**H04N 19/593; H04N 19/105; H04N 19/176;
H04N 19/52**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Beijing Xiaomi Mobile Software Co.,
Ltd.
Beijing 100085 (CN)**

(72) Inventors:
• **ABDOLI, Mohsen
Beijing 100085 (CN)**
• **GHAZNAVI YOUVALARI, Ramin
Beijing 100085 (CN)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(54) **METHOD AND APPARATUS FOR INTRA BLOCK COPY FUSION, AND ENCODER/DECODER INCLUDING THE SAME**

(57)    A method of predicting one or more blocks of a picture is described. The method includes predicting the one or more blocks of the picture by applying a fusion of at least two predictions. The at least two predictions comprise a prediction using intra block copy, IBC, and/or a prediction using Intra template matching prediction, In-traTmp.

Predicting the one or more blocks of the picture by applying a fusion of at least two predictions... — S100

Fig. 6

**EP 4 642 026 A1**

**Description**

**Technical Field**

The present disclosure generally relates to the field of encoding/decoding pictures, images or videos, and embodiments of the present disclosure concern improvements regarding a prediction. More specific embodiments of the present disclosure relate to an intra prediction mode that applies a fusion of at least two predictions.

**Background**

The encoding and decoding of a picture, an image or a video is performed in accordance with a certain standard, for example, in accordance with the advanced video coding, AVC standard (see reference [1]), the high efficiency video coding, HEVC, standard (see reference [2]) or the versatile video coding, VVC, standard (see reference [3]).
For encoding and decoding of a picture, an image or a video a prediction mode may be applied. Various prediction modes are known, which have different properties. For example one or more prediction modes may provide for fusion providing certain advantages while relying on a template texture, and one or more other prediction modes do not provide for fusion but rely on a block texture requiring signaling.
Thus, there is a need to provide further improvements for a prediction mode to be applied for encoding and decoding of a picture, an image or a video.

**Summary**

The present disclosure provides a method of predicting one or more blocks of a picture, the method comprising: predicting the one or more blocks of the picture by applying a fusion of at least two predictions, wherein the at least two predictions comprise a prediction using intra block copy, IBC, and/or a prediction using Intra template matching prediction, IntraTmp.
Optionally, the predicting comprises:

- obtaining at least one Explicit Block Vector, EBV, prediction signal,
- computing at least one Implicit Block Vector, IBV, prediction signal, and
- applying a fusion of the at least one EVB prediction signal with the at least one IBV prediction signal for obtaining at least one fusion prediction signal.

Optionally, the obtaining at least one EBV and computing at least one IBV is performed sequentially or in parallel.
Optionally, the at least one EBV prediction signal is obtained using an IBC process.
Optionally, the at least one IBV prediction signal is computed using an IntraTmp process.
Optionally, using the IntraTmp process for computing the at least one IBV prediction signal comprises selecting an IntraTmp candidate as the IBV prediction signal having a highest similarity

- with a template around a current block, or
- with the EBV prediction signal.

Optionally, selecting the IntraTmp candidate as the IBV prediction signal having a highest similarity with the template around the current block comprises:

- selecting from a set of IntraTmp candidates, the IntraTmp candidate as the IBV prediction signal which has the lowest template cost.

Optionally, the set of IntraTmp candidates is provided by a template search.
Optionally, the set of IntraTmp candidates are sorted based on their template cost.
Optionally, selecting the IntraTmp candidate as the IBV prediction signal having a highest similarity with the EBV prediction signal comprises:

- performing a search on a reconstructed area of the picture, and
- for each potential IBV prediction signal,

    o compare a metric of similarity between the EBV prediction signal and the potential IBV prediction signal,
    o selecting the IBV prediction signal having the highest similarity.

Optionally, the metric of similarity is based on

- a distortion between the EBV prediction signal and the IBV prediction signal, or
- a texture analysis on the EBV prediction signal and the IBV prediction signal.

Optionally, the distortion between the EBV prediction signal and the IBV prediction signal is determined using a Sum of Absolute Differences SAD, or a Sum Square Error, SSE, or a Sum of Absolute Transformed Differences, SATD.

Optionally, the texture analysis on the EBV prediction signal and the IBV prediction signal comprises:

- applying horizontal and vertical Sobel filters on each prediction signal,
- using the algorithm of Decoder-side Intra Mode derivation, DIMD, to derive one Virtual Intra Prediction Mode, VIPM, from each prediction signal,
- comparing the VIPMs for determining the similarity metric with the potential IBV prediction signal.

Optionally, using the IntraTmp process for computing the at least one IBV prediction signal comprises:

- selecting from a set of IntraTmp candidates, a subset of IntraTmp candidates having template costs below a certain threshold, and
- selecting, from the subset of IntraTmp candidates, the IntraTmp candidate as the IBV prediction signal having the highest metric of similarity with the EBV prediction signal.

Optionally, the IBV prediction signal is not used responsive to one or more constraints.

Optionally, the one or more constraints comprises an Euclidean distance between the EBV prediction signal and the IBV prediction signal exceeding a threshold.

Optionally, applying the fusion of the at least two predictions comprises:

- linear weighting the at least two predictions at a block level to generate the at least one fusion prediction signal.

Optionally, the at least two predictions comprise the EBV prediction signal and the IBV prediction signal, and each pixel value of the at least one fusion prediction signal is computed as follows:

$$P_F^{i,j} = \omega_{IBV} P_{IBV}^{i,j} + \omega_{EBV} P_{EBV}^{i,j}$$

where

$P_F^{i,j}$     pixel value of the at least one fusion prediction signal,

$\omega_{IBV}$     fusion weight for the IBV prediction signal,

$P_{IBV}^{i,j}$     IBV prediction signal,

$\omega_{EBV}$     fusion weight for the EBV prediction signal,

$P_{EBV}^{i,j}$     EBV prediction signal,

$i, j$     i and j are horizontal and vertical position of a pixel within the block that is to be predicted by fusion.

Optionally, the fusion weights for the EBV prediction signal and for the IBV prediction signal are different, and are constant weights which are used for all blocks.

Optionally, the fusion weights for the EBV prediction signal and for the IBV prediction signal are adapted for each block.

Optionally, the fusion weights are adapted explicitly or implicitly.

Optionally, for explicitly adapting the fusion weights, the fusion weights are explicitly signaled.

Optionally, for implicitly adapting the fusion weights, the fusion weights are derived using available information.

Optionally, the available information comprises template cost, and the fusion weights are derived as follows:

$$\omega_{EBV} = 1 - \frac{Cost_{EBV}}{Cost_{EBV} + COST_{IBV}}$$

$$\omega_{IBV} = 1 - \frac{Cost_{IBV}}{Cost_{EBV} + COST_{IBV}}$$

where

$Cost_{EBV}$  template costs based on costs of the template $T_{EBV}$ around the EBV prediction signal and the template $T_{curr}$ around the current block, and

$Cost_{IBV}$  template costs based on costs of the template $T_{IBV}$ around the IBV prediction and the template $T_{curr}$ around the current block.

Optionally, applying the fusion of the at least two predictions comprises:

- using a Linear Model, LM, solver to generate the at least one fusion prediction signal.

Optionally, the LM solver is overfitted by using the template $T_{EBV}$ around the EBV prediction and the template $T_{IBV}$ around the IBV prediction templates as an input and the template $T_{curr}$ around the current block as a target, and outputs the at least one fusion prediction signal $P_F$.

Optionally, an eligibility of the fusion of the at least two predictions for a certain block of the picture depends on one or more criteria.

Optionally, the one or more criteria comprise one of more of the following:

- the block is IBC-coded,
- the block has a certain block size,
- a joint usage of IBC and of other coding tools such as LIC or bi-prediction or CIIP, limits the eligibility.

Optionally, the method comprises

- signaling an eligibility of the fusion of the at least two predictions for a certain block explicitly or implicitly.

Optionally, explicitly signaling the eligibility comprises:

- signaling a flag for each eligible block indicating whether or not to use the fusion of the at least two predictions.

Optionally, implicitly signaling the eligibility comprises:

- determining an eligible block whether or not to use of the fusion of the at least two predictions using the information that is available at a decoder side.

Optionally, the at least two predictions comprise the EBV prediction signal and the IBV prediction signal, and wherein determining an eligible block comprises:

- computing cost of a template around the IBV prediction signal,
- determining to use of the fusion of the at least two predictions when the cost of a template around the IBV prediction signal exceeds the cost of a template around the EBV prediction signal, and
- determining not to use of the fusion of the at least two predictions when the cost of a template around the IBV prediction signal is less than the cost of a template around the EBV prediction signal.

Optionally, the predicting the one or more blocks of the picture by applying a fusion of at least two predictions comprises:

- combining a primary prediction with a secondary prediction, where the secondary prediction is determined implicitly.

Optionally, the primary prediction comprises an Explicit Block Vector, EBV, based prediction, and the secondary prediction comprises an Implicit Block Vector, IBV, based prediction or another EBV-based prediction.

Optionally, the primary prediction is obtained by using a signaled BV indicator of an EBV prediction in the bitstream for the current block.

Optionally, the secondary prediction is another EBV-based prediction associated with an explicit signaling for another block.

Optionally, the secondary prediction is selected from a list of candidates that includes both EBV-based predictions and IBV-based predictions.

Optionally, the list includes

- N EBV-based candidates obtained using *Advanced Motion Vector Prediction,* AMVP, and merge modes for IBC; and
- M IBV-based candidates obtained using an intraTMP search mechanisms.

Optionally, the method comprises:

- pruning the list in order to avoid including duplicate predictions or predictions that are same as the primary prediction.

Optionally, the method comprises:

- sorting the list from best to worst predictions, and
- using the best prediction from the sorted list as secondary prediction to be fused with the primary prediction.

Optionally, the list is sorted based on

- the template cost associated with a candidate prediction compared to the template of the current block, or
- a similarity of a candidate prediction to the primary prediction. In this case, the primary prediction is used as reference and the costs of the combined list candidates are calculated accordingly, or
- a similarity of a Virtual Intra Prediction Mode, VIPM, of each candidate prediction and a VIPM of the primary prediction.

The present disclosure provides a method for decoding an encoded data stream, the encoded data stream including data representing a picture, the method comprising:

decoding from the encoded data stream the picture,
wherein decoding the picture comprises predicting one or more blocks of a picture by applying a fusion of at least two predictions, wherein the at least two predictions comprise a prediction using intra block copy, IBC, and/or a prediction using Intra template matching prediction, IntraTmp.

The present disclosure provides a method for encoding a picture into an encoded data stream, the encoded data stream including data representing the picture, the method comprising:

receiving an original picture, and
encoding the picture into the encoded data stream,
wherein encoding the picture comprises predicting one or more blocks of a picture by applying a fusion of at least two predictions, wherein the at least two predictions comprise a prediction using intra block copy, IBC, and/or a prediction using Intra template matching prediction, IntraTmp.

Optionally, the method comprises:

- including into the data stream a flag for indicating for a block whether or not to use the fusion of the at least two predictions.

The present disclosure provides a non-transitory computer-readable storage medium comprising instructions which, when executed by a computer, cause the computer to carry out the method of any one of the embodiments of the present disclosure.

The present disclosure provides an apparatus of predicting one or more blocks of a picture, the apparatus comprising:
a prediction module configured to predict the one or more blocks of the picture by applying a fusion of at least two predictions, wherein the at least two predictions comprise a prediction using intra block copy, IBC, and/or a prediction using Intra template matching prediction, IntraTmp.

The present disclosure provides an apparatus for decoding an encoded data stream, the encoded data stream including data representing a picture, the apparatus comprising:

a decoder module configured to decode from the encoded data stream the picture, and

a prediction module, the prediction module including an apparatus according to embodiments of the present disclosure.

The present disclosure provides an apparatus for encoding a picture into an encoded data stream, the encoded data stream including data representing the picture, the apparatus comprising:

an encoder module configured to receive the original picture and to encode the picture into the encoded data stream, and

a prediction module, the prediction module including an apparatus according to embodiments of the present disclosure.

The present disclosure provides a data stream having encoded thereinto a picture, wherein the data stream comprises:

a flag, the flag indicating for one or more blocks of the picture whether or not to predict the one or more blocks of the picture by applying a fusion of at least two predictions at the decoder side, wherein the at least two predictions comprise a prediction using intra block copy, IBC, and/or a prediction using Intra template matching prediction, IntraTmp.

The technical solutions provided according to embodiments of the present disclosure have the following beneficial effects.

In prior art approaches, a plurality of prediction modes are available for predicting a block of a picture, e.g., using a prediction module at an encoder and/or at a decoder. The various prediction modes provide respective advantages which may come at the cost of same drawbacks. For example, an Intra template matching, IntraTmp, prediction provides for a fusion which is advantageous as it may cause, e.g., a smoothing or a denoising. However, IntraTmp relies heavily on a template texture and it is possible that the template texture is uncorrelated to a texture of a block or CU currently processed. On the other hand, Intra block copy, IBC, prediction provides no fusion but relies on the block texture itself, which comes at the cost of Block Vector Difference (BVD) and/or Block Vector identifier signaling. Thus, the available prediction modes have their advantages and disadvantages so using only one prediction mode may not be suitable for obtaining desired decoding results.

Embodiments of the present disclosure addresses the above drawbacks by enabling an intra prediction mode that applies a fusion of at least two predictions, where at least one prediction uses an Intra block copy, IBC, method and at least one prediction uses Intra template matching, IntraTmp, prediction. In accordance with embodiments, the coding mode is referred to as IbcFusion.

It is to be understood that the content described in this section is not intended to identify key or critical features of the embodiment of the present disclosure, nor is it intended to limit the scope of the present disclosure. Other features of the present disclosure become readily apparent from the following description.

## Brief Description of the Drawings

The drawings are explanatory and serve to explain the present disclosure, and are not to be construed to limit the present disclosure to the illustrated embodiments.

| | |
|---|---|
| Fig. 1 | is a block diagram of a conventional video encoder; |
| Fig. 2 | is a block diagram of a conventional video decoder; |
| Fig. 3(A) to Fig. 3(D) | illustrate a current CTU processing order and its available reference samples in a current CTU and a left CTU for the Intra block copy (IBC) mode; |
| Fig. 4 | illustrate an intra template matching search area for the Intra template matching prediction (IntraTMP) mode; |
| Fig. 5 | illustrates the use of an IntraTMP block vector for an IBC block; |
| Fig. 6 | illustrates a flow diagram of a method of predicting one or more blocks of a picture in accordance with embodiments of the present disclosure; |
| Fig. 7 | illustrates an embodiment of the IBV fusion mode applying the steps of the IBV fusion mode sequentially in accordance with embodiments of the present disclosure; |
| Fig. 8 | illustrates an embodiment of the IBV fusion mode applying some of the steps of the IBV fusion mode in parallel in accordance with embodiments of the present disclosure; |
| Fig. 9 | illustrates an embodiment for determining whether or not to use a potential IBV candidate for the IbcFusion of a current CU in accordance with embodiments of the present disclosure; |
| Fig. 10 | illustrates an adaptive fusion weighting using template cost in accordance with embodiments of the present disclosure; |
| Fig. 11 | illustrates an adaptive fusion using an LM solver in accordance with embodiments of the pre- |

sent disclosure;

Fig. 12    illustrates how to use template costs for comparison in order to determine whether or not use IbcFusion mode on an eligible CU in accordance with embodiments of the present disclosure;

Fig. 13    illustrates a flow diagram of a method for decoding an encoded data stream in accordance with embodiments of the present disclosure;

Fig. 14    illustrates a flow diagram of a method for encoding a picture into an encoded data stream in accordance with embodiments of the present disclosure;

Fig. 15    illustrates a block diagram of an apparatus of predicting one or more blocks of a picture in accordance with embodiments of the present disclosure;

Fig. 16    illustrates a block diagram of a decoder for decoding an encoded data stream in accordance with embodiments of the present disclosure;

Fig. 17    illustrates a block diagram of an encoder for encoding a picture into an encoded data stream in accordance with embodiments of the present disclosure;

Fig. 18    illustrates a data stream in accordance with embodiments of the present disclosure; and

Fig. 19    illustrates a block diagram illustrating an electronic device according to embodiments of the present disclosure.

## Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

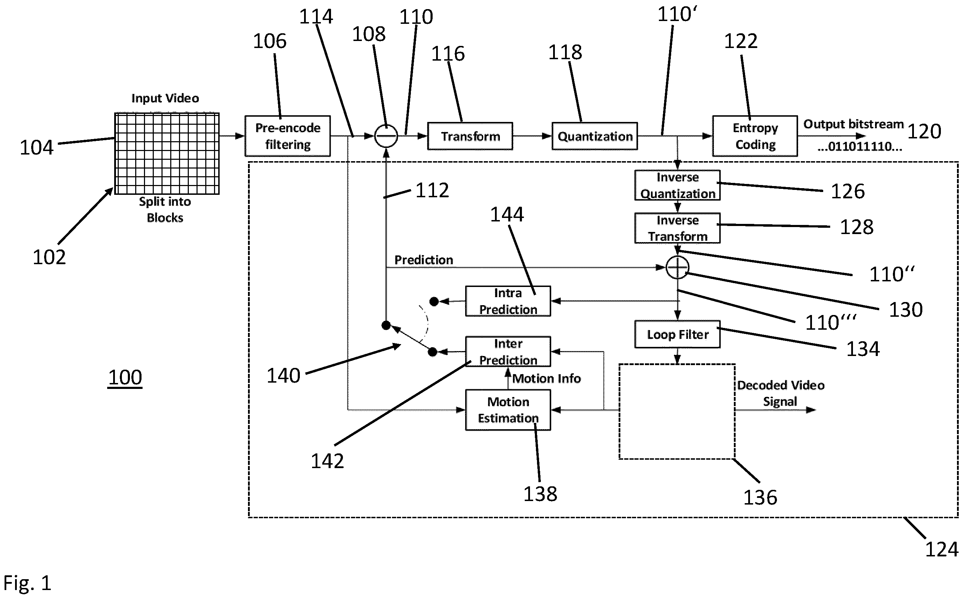

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intralinter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intralinter decision, for example, by means of a prediction mode flag. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110‴ that may serve as a reference data for predicting future CUs or blocks to encode. The quantized transform coefficients 110’ are de-quantized and inverse transformed leading to a decoded prediction CU or block 110", and the decoded prediction residuals and the predicted block are then combined at 130, typically summed, so as to provide the reconstructed block or CU 110‴. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

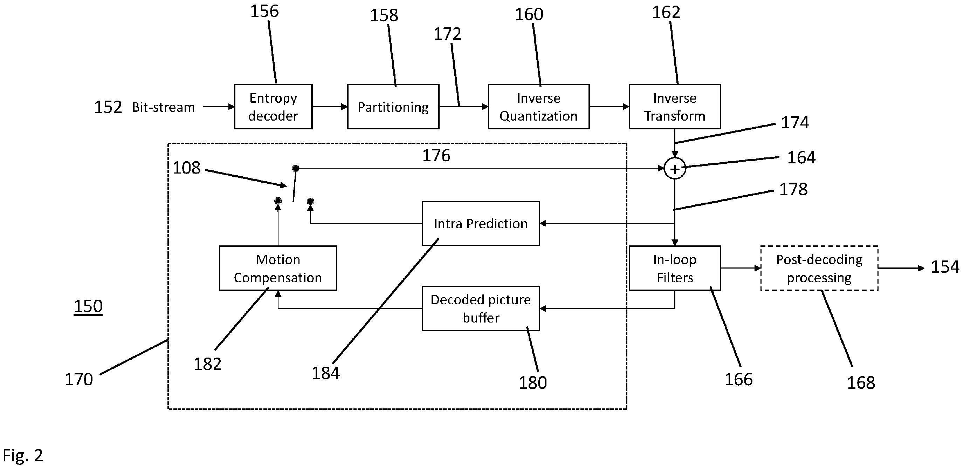

Fig. 2 is a block diagram of a video decoder 150 for predictively decoding from a data or bit stream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bit stream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 1768 The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

For encoding and decoding of a picture, an image or a video in a way as described above an intra prediction mode may be applied, e.g., an Intra block copy (IBC) tool or an Intra template matching prediction (IntraTMP) tool.

Intra block copy (IBC)

Intra block copy (IBC) is a tool adopted in HEVC extensions on SCC (Screen Content Coding Extension). IBC significantly improves the coding efficiency of screen content materials. Since the IBC mode is implemented as a block level coding mode, block matching (BM) is performed at the encoder to find the optimal block vector (or motion vector) for each CU. Here, a block vector is used to indicate the displacement from the current block to a reference block, which is already reconstructed inside the current picture. When combined with AMVR (Adaptive Motion. Vector Resolution), the IBC mode can switch between 1-pel and 4-pel motion vector precisions. An IBC-coded CU is treated as the third prediction mode other than intra or inter prediction modes. The IBC mode is applicable to the CUs with both width and height smaller than or equal to 64 luma samples.

At the encoder side, hash-based motion estimation is performed for IBC. The encoder performs RD (rate-distortion) check for blocks with either width or height no larger than 16 luma samples. For non-merge mode, the block vector search is performed using hash-based search first. If hash search does not return valid candidate, block matching based local search is performed.

In the hash-based search, hash key matching (32-bit CRC) between the current block and a reference block is extended to all allowed block sizes. The hash key calculation for every position in the current picture is based on 4x4 subblocks. For the current block of a larger size, a hash key is determined to match that of the reference block when all the hash keys of all 4×4 subblocks match the hash keys in the corresponding reference locations. If hash keys of multiple reference blocks are found to match that of the current block, the block vector costs of each matched reference are calculated and the one with the minimum cost is selected.

In block matching search, the search range is set to cover both the previous and current CTUs.

At CU level, IBC mode is signaled with a flag and it can be signaled as IBC AMVP (Advanced Motion Vector Prediction) mode or IBC skip/merge mode as follows:

- IBC skip/merge mode: a merge candidate index is used to indicate which of the block vectors in the list from neighboring candidate IBC coded blocks is used to predict the current block. The merge list consists of spatial, HMVP, and pairwise candidates.

- IBC AMVP mode: a block vector difference is coded in the same way as a motion vector difference. The block vector prediction method uses two candidates as predictors, one from left neighbor and one from above neighbor (if IBC coded). When either neighbor is not available, a default block vector is used as a predictor. A flag is signaled to indicate the block vector predictor index.

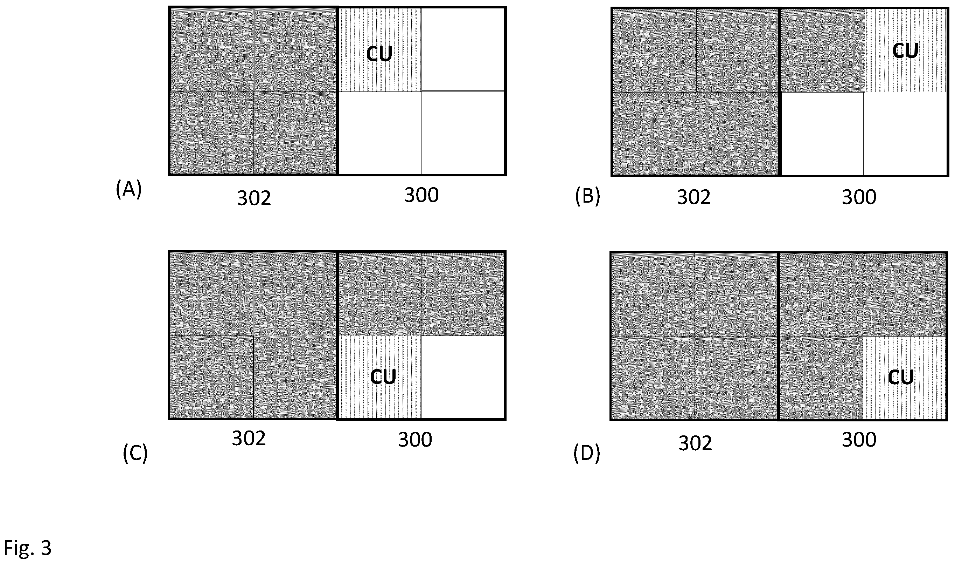

To reduce memory consumption and decoder complexity, the IBC in VVC allows only the reconstructed portion of the predefined area including the region of the current CTU and some region of the left CTU. Fig. 3(A) to Fig. 3(D) illustrate a current CTU 300 processing order and its available reference samples in the current CTU 300 and a left CTU 302, more specifically, the reference regions of the IBC Mode, where each block represents 64x64 luma sample unit. Depending on the location of the current coding CU location within the current CTU 300, the following applies:

- If current block CU falls into the top-left 64x64 block of the current CTU 300 (see Fig. 3(A)), then in addition to the already reconstructed samples in the current CTU 300, it can also refer to the reference samples in the bottom-right 64x64 blocks of the left CTU 302, using CPR mode. The current block CU can also refer to the reference samples in the bottom-left 64x64 block of the left CTU 302 and the reference samples in the top-right 64x64 block of the left CTU (302), using CPR mode.
- If current block CU falls into the top-right 64x64 block of the current CTU 300 (see Fig. 3(B)), then in addition to the already reconstructed samples in the current CTU 300, if luma location (0, 64) relative to the current CTU (300) has not yet been reconstructed, the current block CU can also refer to the reference samples in the bottom-left 64x64 block and bottom-right 64x64 block of the left CTU 302, using CPR mode; otherwise, the current block CU can also refer to reference samples in bottom-right 64x64 block of the left CTU 302.
- If current block CU falls into the bottom-left 64x64 block of the current CTU 300 (see Fig. 3(C)), then in addition to the already reconstructed samples in the current CTU 300, if luma location (64, 0) relative to the current CTU 300 has not yet been reconstructed, the current block CU can also refer to the reference samples in the top-right 64x64 block and bottom-right 64x64 block of the left CTU 302, using CPR mode. Otherwise, the current block CU can also refer to the reference samples in the bottom-right 64x64 block of the left CTU 300, using CPR mode.
- If current block CU falls into the bottom-right 64x64 block of the current CTU 300 (see Fig. 3(D)), it can only refer to the already reconstructed samples in the current CTU 300, using CPR mode.

This restriction allows the IBC mode to be implemented using local on-chip memory for hardware implementations.

Intra template matching prediction (IntraTMP)

Intra template matching prediction (IntraTMP) is a special intra prediction mode that copies the best prediction block from the reconstructed part of the current frame, whose L-shaped template matches the current template. For a predefined search range, the encoder searches for the most similar template to the current template in a reconstructed part of the current frame and uses the corresponding block as a prediction block. The encoder then signals the usage of this mode, and the same prediction operation is performed at the decoder side.

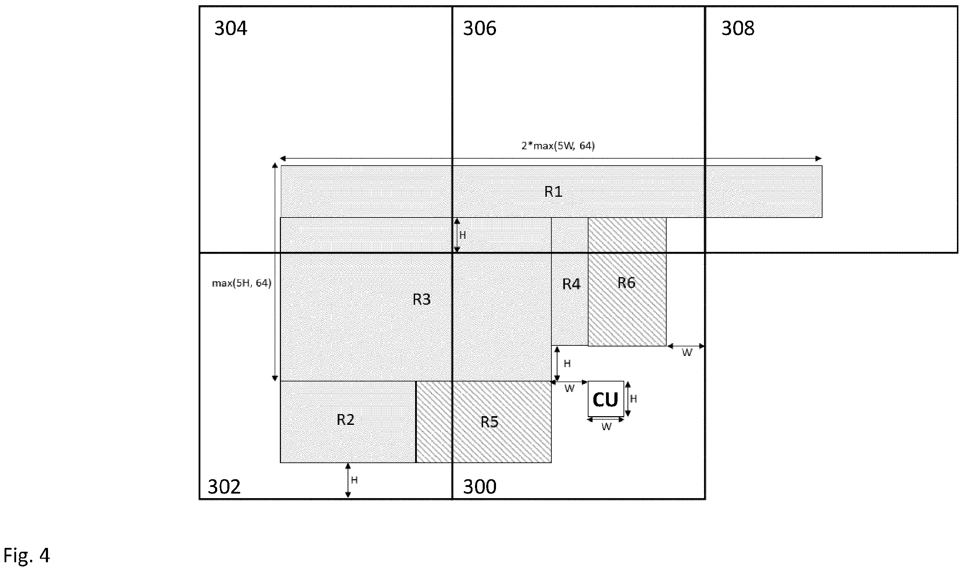

The prediction signal is generated by matching the L-shaped, Top-only or Left-Only causal neighbor of the current block with another block in a predefined search area illustrated in Fig. 4. There are 6 predefined search areas, i.e., R1 to R6 in Fig. 4 which contain the reconstructed samples from the top CTUs 304 to 308 and the left CTU 302 as well as part of the reconstructed samples within the current CTU 300 that are located above, left, bottom-left and top-right to the current block CU.

IntraTMP employs an implicit merge mode, where merge candidates are considered without signaling a merge flag or index. Specifically, the reference positions pointed by the block vectors of all the adjacent and non-adjacent merge candidates (coded in IntraTMP or IBC mode) are used as additional candidates beyond the default search areas. The same template matching cost is used to compare the merge positions and the defaults ones. For bi-directional IBC merge candidate, two candidates are retained corresponding to each reference frame. Similarly, for IntraTMP, two candidates are considered corresponding to the best candidate by template search and the coded candidate.

The sum of absolute differences (SAD) is used as a cost function.

A given search order of the 6 regions is utilized, e.g., R4, R5, R6, R1, R2, and R3. Within each region, the decoder constructs a candidate list of up to "19" template matching block vectors that are ranked in ascending order according to the template cost (SAD). The following modes are supported:

> 1- Single predictor: A single predictor is selected from the candidate list.
> 2- Fusion of multiple predictors: multiple predictors are blended multiple to derive the final prediction block. The blending weights are either computed from the template matching cost of each predictor, or with Wiener-filter based weight derivation method.
> 3- Sub-pel precision: When single predictor is used, sub-pel precision can be used with 1/2-pel precision, 1/4-pel precision and 3/4-pel precision, each with 8 possible directions.
> 4- Linear filter model: A linear filter can be learned between the reference template and current template and be applied the linear model to reference block. This mode can be used for single predictor when sub-pel precision is not used.

Additionally, IntraTMP with local illumination compensation is allowed. The following considerations are taken:

> 1- Usages of LIC and FLM (CCCM-like filtering) are mutually exclusive for a given CU.
> 2- Usages of LIC together with fusion in intra TMP is allowed.
> 3- Top-only and Left-only template usage for LIC model determination is allowed for screen content coding. For camera-captured coding, only the top-left template is employed.
> 4- Multi Mode Linear Model (MMLM) is supported similarly to IBC-LIC, for screen content coding.

When LIC is used for a given CU, the Intra TMP search process employs MRSAD rather than SAD distortion function.

The dimensions of all regions (SearchRange_w, SearchRange_h) are set proportional to the block dimension (BlkW, BlkH) to have a fixed number of SAD comparisons per pixel. That is:

$$SearchRange\_w = min(64, a * BlkW)$$

$$SearchRange\_h = min(64, a * BlkH)$$

where 'a' is a constant that controls the gain/complexity trade-off. In practice, 'a' may be equal to 5.

To speed-up the template matching process, the search range of all search regions is subsampled by a factor of 4. After finding the best match, a refinement process is performed. The refinement is done via a second template matching search around the best match with a reduced range.

The Intra template matching tool is enabled for CUs with a size less than or equal to 64 in width and height. This maximum CU size for Intra template matching is configurable.

The Intra template matching prediction mode is signaled at CU level through a dedicated flag when decoder-side intra mode derivation (DIMD) is not used for the current CU.

IntraTMP derived block vector candidates for IBC

In this method a block vector (BV) derived from the intra template matching prediction (IntraTMP) is used for the intra block copy (IBC). The stored IntraTMP BV of the neighboring blocks along with the IBC BV are used as spatial BV candidates in the IBC candidate list construction.

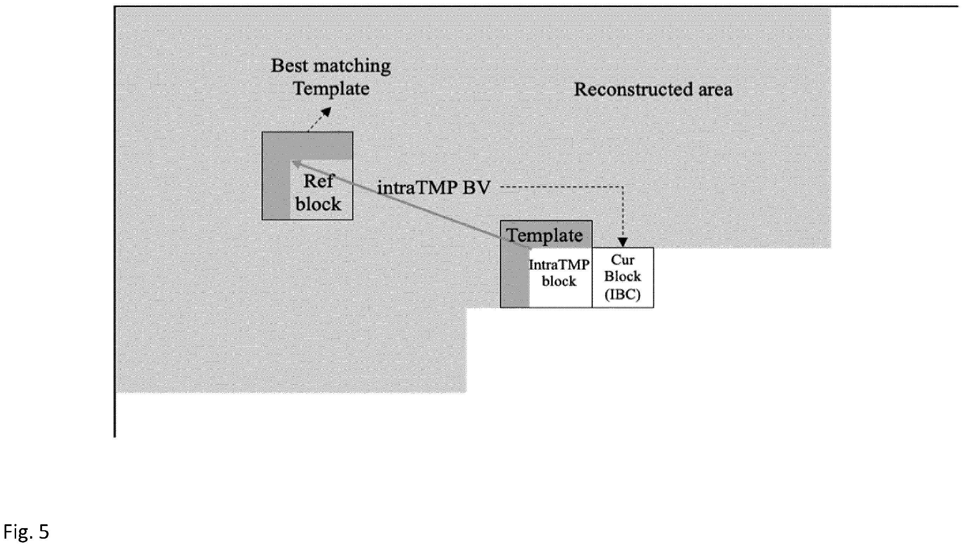

The IntraTMP block vector is stored in the IBC block vector buffer, and the current IBC block can use both IBC BV and IntraTMP BV of neighboring blocks as BV candidate for IBC BV candidate list as shown in Fig. 5 which illustrates the use of an IntraTMP block vector for an IBC block.

The IntraTMP block vectors are added to the IBC block vector candidate list as spatial candidates. The IntraTMP block vectors are stored in quarter-pel resolution for the coding of the IBC block vectors and the History based Motion Vector prediction (HMVP).

Miscellaneous tools

In this disclosure, the following coding tools are referred to. For further information, a detailed description of these algorithms are provided in algorithm description of ECM-12.0 (see reference [5]):

- Combined Intra-Inter Prediction (CIIP)
- Decoder-side Intra Mode derivation (DIMD)
- Linear Model (LM) solver
- Luminance Illuminance Compensation (LIC)

The current design of ECM has the following two aspects:

1. IntraTmp has fusion. IBC does not. There is an advantage in fusion, e.g. smoothing, denoising etc.
2. IntraTmp relies heavily on the template texture, while it is possible that a template texture is uncorrelated to a block texture (e.g. object border matching block border). IBC however relies on the block texture itself, which comes at the cost of Block Vector Difference (BVD) and/or Block Vector identifier (from a block vector candidates list) signaling.

The above shortcomings in the current design of ECM that can be addressed by the present disclosure enabling fusion, e.g., enabling fusion for IBC. More specifically, the present disclosure enables an intra prediction mode that applies a fusion of at least two predictions. The at least two predictions include a prediction using intra block copy, IBC, and a prediction using Intra template matching prediction, IntraTmp.

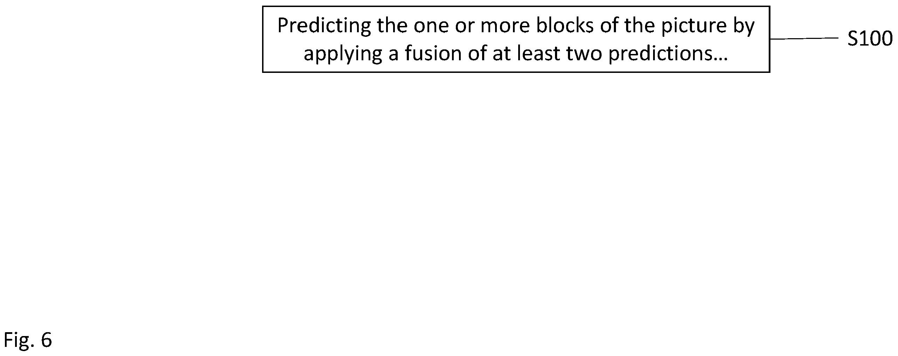

Fig. 6 illustrates a flow diagram of a method of predicting one or more blocks of a picture. The method includes the following:

S 100: Predicting the one or more blocks of the picture by applying a fusion of at least two predictions. The at least two predictions include a prediction using intra block copy, IBC, and a prediction using Intra template matching prediction, IntraTmp.

IbcFusion

Embodiments of the present disclosure enabling an intra prediction mode that applies a fusion of at least two predictions are now described. In accordance with embodiments, at least one prediction uses a current IBC method and at least one prediction uses an IntraTmp prediction. The new coding mode is also referred to in the following as IbcFusion. In this new coding mode at least one BV is signaled and at least one template matching search is applied.

At the decoder side, a given CU that uses IbcFusion as coding tool, AND a final prediction signal (i.e. before applying residual coding) is computed by performing the following three steps:

1- Compute at least one first prediction signal using a Block Vector (BV) that has been explicitly signaled with the bitstream. This prediction signal is also referred to in the following as THE Explicit-BV (EBV) prediction signal.
2- Compute at least one prediction signal using a method that does not require any explicit BV signaled in the bitstream. Instead, this prediction is computed using a coding tool that uses implicit BV. This prediction signal is also referred to in the following as the Implicit-BV (IBV) prediction signal.
3- Apply fusion of the EBV prediction signal with the IBV prediction signal. The output of the fusion step is also referred to in the following as the fusion prediction signal.

As it is possible to have more than one prediction signal for both EVB and IBV, for the sake of simplicity in the rest of this description, only one prediction signal is considered for each prediction signal. However, all aspects are generalizable to more than one prediction signal.

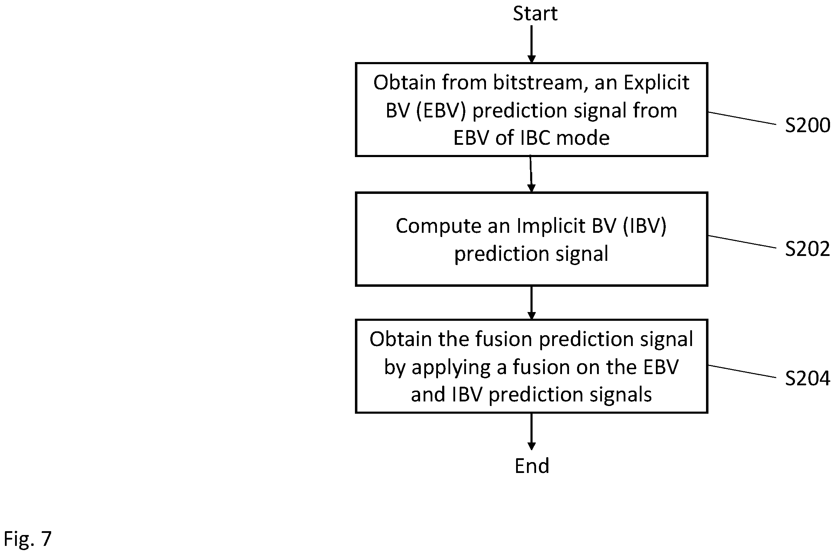

Fig. 7 illustrates an embodiment of the IBV fusion mode applying the above described three main steps of the IBV fusion mode sequentially. The method includes the following steps:

S200: Obtain from bitstream, an Explicit BV (EBV) prediction signal from EBV of IBC mode.
S202: Compute an Implicit BV (IBV) prediction signal.
S204: Obtain the fusion prediction signal by applying a fusion on the EBV and IBV prediction signals.

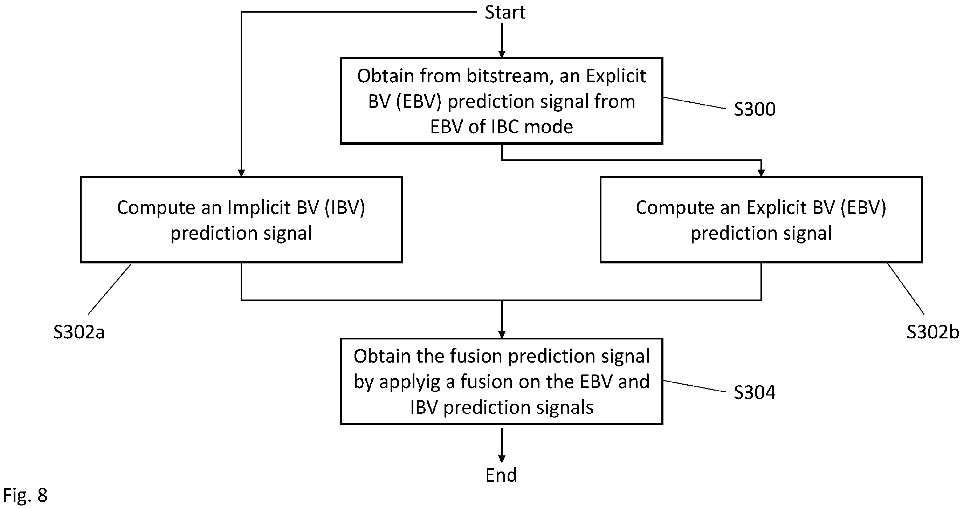

Fig. 8 illustrates an embodiment of the IBV fusion mode applying two of the above described main steps of the IBV fusion mode in parallel. The method includes the following steps:

S300: Obtain from bitstream, an Explicit BV (EBV) prediction signal from EBV of IBC mode.

S302a: Compute an Implicit BV (IBV) prediction signal.
S302b: Compute an Explicit BV (EBV) prediction signal.
S304: Obtain the fusion prediction signal by applying a fusion on the EBV and IBV prediction signals.

As is illustrated, steps S302a and S302b are performed in parallel.

*Explicit BVprediction signal*

In accordance with embodiments, the computation of the BV-based prediction signal follows the process of the IBC algorithm, in which the BV can be signaled differently depending on the internal parameters of IBC.

In some cases, where more than one BV is explicitly signaled for a block through IBC method, it is also possible to have more than one BV-based prediction signals.

*Implicit BVprediction signal*

In accordance with other embodiments, to compute the IBV prediction signal, all to do is to obtain the IBV and then apply the same procedure as IBC. That is to say, using to IBV and copying a region of already-reconstructed signal in the current frame that the IBV is pointing to.

In accordance with embodiments, a first approach for the computation of the IBV prediction signal can follow the process of IntraTmp, in which a template cost on different implicit BV positions is computed. In IntraTmp, a set of potential IBV candidates are provided by the template search, which are typically sorted based on their template cost. One can take the best IntraTmp candidate as the IBV, that has lowest template cost.

In accordance with embodiments, a second approach to obtain the IBV is to perform a search on the reconstructed area, and for each potential IBV, compare a metric of similarity between

1) the explicit BV prediction signal (provided by EBV of IBC) and
2) the potential implicit BV prediction signal (provided by the potential IBV).

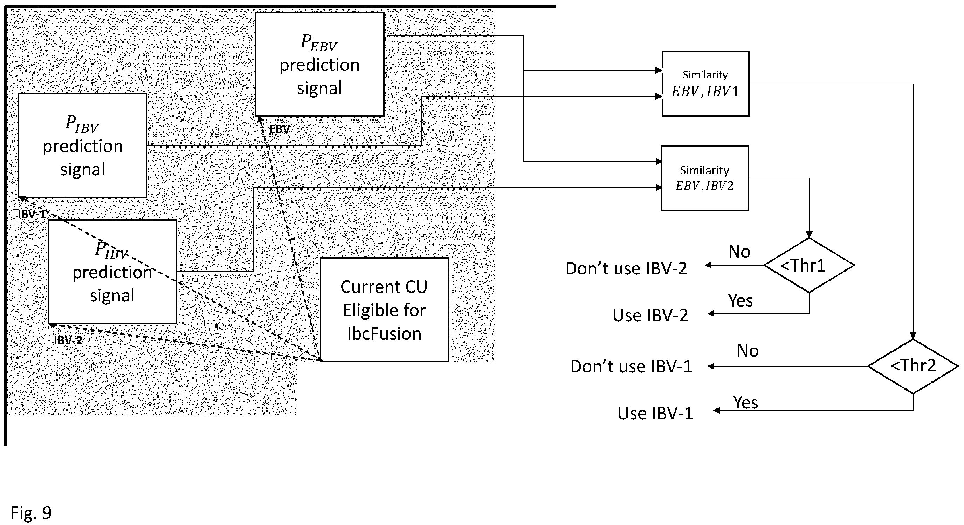

Once all potential IBVs are searched, the one with highest similarity is selected. In this approach, different similarity metrics can be used. One category of metrics is based on the distortion between the two prediction signals (e.g. SAD, SSE, SATD etc.). Another category of metrics is based on texture analysis on the two prediction signals and extracting feature(s). For instance, one can apply horizontal and vertical Sobel filters on each prediction signal and then use the algorithm of DIMD to derive one so-called Virtual IPM (VIPM) from each prediction signal. Then, the two VIPMs are compared to determine the similarity metric for the potential IBV. Figure 9 shows a schematic example of how to determine whether two potential IBV candidates are used for IbcFusion algorithm.

The main difference between the first and second approach is that, in the first approach the template around a current CU is used as the reference of similarity. While in the second approach, the prediction signal provided by the EBV is used as the reference of similarity.

In accordance with embodiments, a third approach to obtain IBV is to combine above approaches. In one example, first a subset of IntraTmp candidates is selected using the first approach. Then, the best IBV candidate is computed based on the similarity metric of the second approach.

Regardless of the above approaches, in accordance with embodiments, one can apply further constraints on potential IBV candidates to exclude them from the process. Fig. 9 illustrates an embodiment for determining whether or not to use a potential IBV candidate IBV-1, IBV-2 for the IbcFusion of the current CU, based on a similarity metric with the EBV prediction signal EBV. For example, one can compute the Euclidean distance between the EBV and each IBV, IBV-1, IBV-2, and compare it against a threshold THR1, THR2 (which may be the same or different). If it is larger than the threshold, it might be excluded from the rest of the process.

*Fusion*

Once both the EBV prediction signal and the IBV prediction signal are computed, the fusion step is applied to generate the final prediction.

In all examples of this section, it is assumed that one EBV prediction signal, noted as $P_{EBV}$, and one IBV prediction signal, noted as $P_{IBV}$, are to be used. Moreover, the output of the fusion step (i.e. the final prediction), referred to as the fusion, is noted as $P_F$.

One approach for applying the prediction fusion step is to use linear weighting at the block level. In other words, each pixel value of the fusion prediction signal is computed as follows:

$$P_F^{i,j} = \omega_{IBV} P_{IBV}^{i,j} + \omega_{EBV} P_{EBV}^{i,j}$$

where

$P_F^{i,j}$      pixel value of the at least one fusion prediction signal,

$\omega_{IBV}$      fusion weight for the IBV prediction signal,

$P_{IBV}^{i,j}$      IBV prediction signal,

$\omega_{EBV}$      fusion weight for the EBV prediction signal,

$P_{EBV}^{i,j}$      EBV prediction signal,

$i, j$      i and j are horizontal and vertical position of a pixel within the block that is to be predicted by fusion.

In the above approach, there are different methods to obtain the fusion weights $\omega_{EBV}$ and $\omega_{IBV}$. According to embodiments, constant weights (e.g. $\omega_{EBV}$ = 0.7 and $\omega_{IBV}$ = 0.3) Are applied that are used for all blocks using the proposed IBC fusion method. Alternatively, according to other embodiments, one can adaptively change the fusion weights for each block. This adaptation can be done either explicitly or implicitly. In explicit adaptation, the fusion weights are explicitly signaled in the bitstream, while in implicit adaptation, weights are derived using available information.

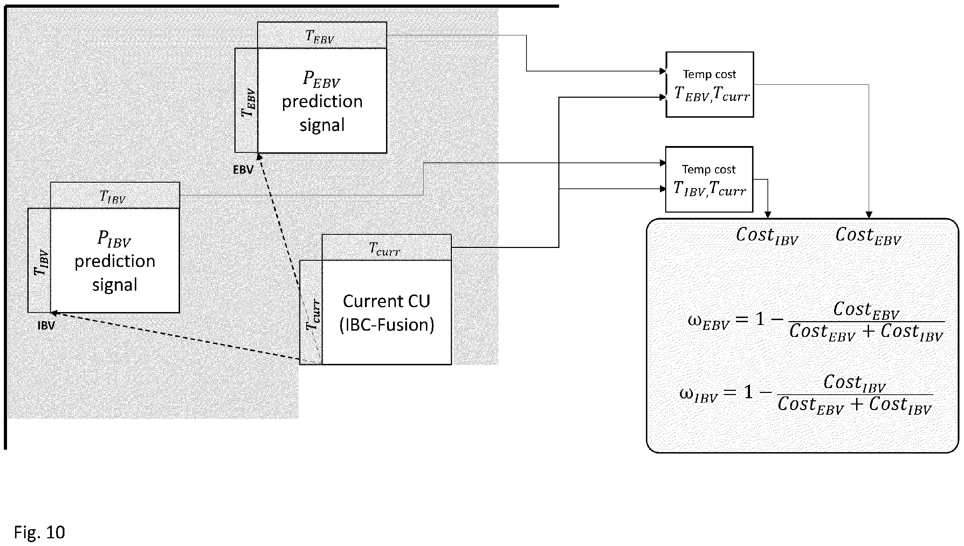

In accordance with embodiments, one method for an implicit fusion weight adaptation is to use the template cost. Fig. 10 illustrates an adaptive fusion weighting using template cost in accordance with embodiments of the present disclosure. Let $T_{EBV}$, $T_{IBV}$ and $T_{curr}$ be templates around the EBV prediction signal, the IBV prediction signal and the current CU, respectively. As is illustrated in Fig. 10 the adaptive weighting is based on these template costs, where one EBV prediction signal is provided by the EBV of the IBC mode and one IBV prediction signal is provided by the IBV from one of the candidates of the IntraTmp mode. Each of these BVs point to an area of the same size as current CU which allows their template cost computation. The adaptive weights are computed proportionally to the template costs as illustrated by the equations shown in Fig. 10.

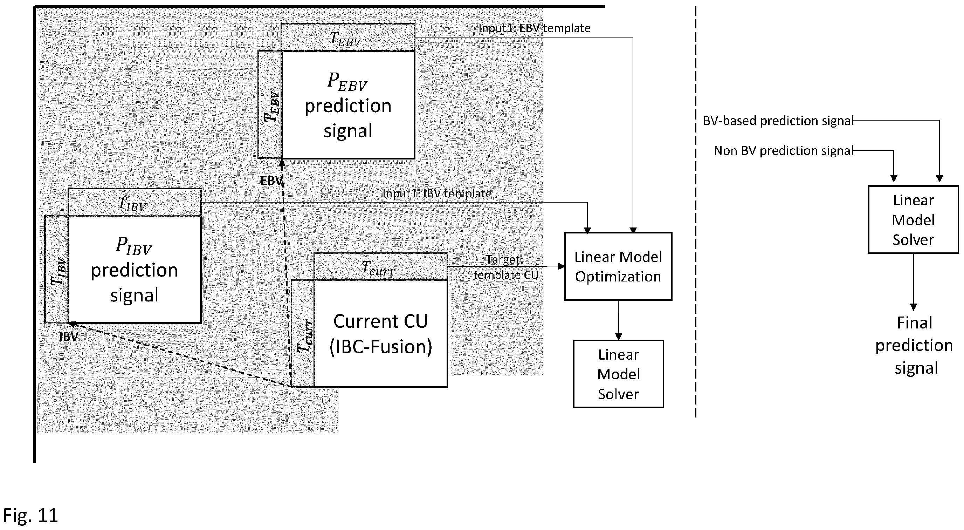

In accordance with other embodiments, the fusion step can be applied using a Linear Model (LM) solver. Fig. 11 illustrates an adaptive fusion using an LM solver in accordance with embodiments of the present disclosure. Instead of using weights, an LM solver is overfitted by using the templates around the prediction signals (i.e. $P_{EBV}$ and $P_{IBV}$) as input and the template around the current CU as target. Once overfitted (or optimized) on the templates, the solver is ready (i.e. optimized) for the fusion of prediction signals. That is to say, it receives the internal pixel content of the prediction signals as input, and outputs the fusion prediction $P_F$. The left side of Fig. 11 (left of the vertical dashed line) illustrates the process of optimizing an LM solver on the template. Once optimized, the right side of Fig. 11 (right of the vertical dashed line) shows how the LM solver may be used for predicting the block, e.g., by receiving the BV-based prediction signal and a non BV prediction signal as input and providing the fusion prediction $P_F$ as output.

*Eligibility and Signaling*

The eligibility of IbcFusion for a given CU can depend on different factors. For example, in one embodiment, one might apply IbcFusion on all CUs that are IBC-coded (i.e. IBC flag is true). In accordance with other embodiments, one might limit usage of IbcFusion on certain block sizes of IBC-coded CUs. Furthermore, in accordance with yet other embodiments, it is possible to rely on joint usage of IBC and of other coding tools such as LIC, bi-prediction or CIIP to limit the eligibility of the IbcFusion method. For example, in one embodiment, only those IBC CUs are eligible that do not use LIC. Stated differently, if a current block is an IBC block where the LIC tool is used (joint usage), then the block is not eligible to apply the fusion.

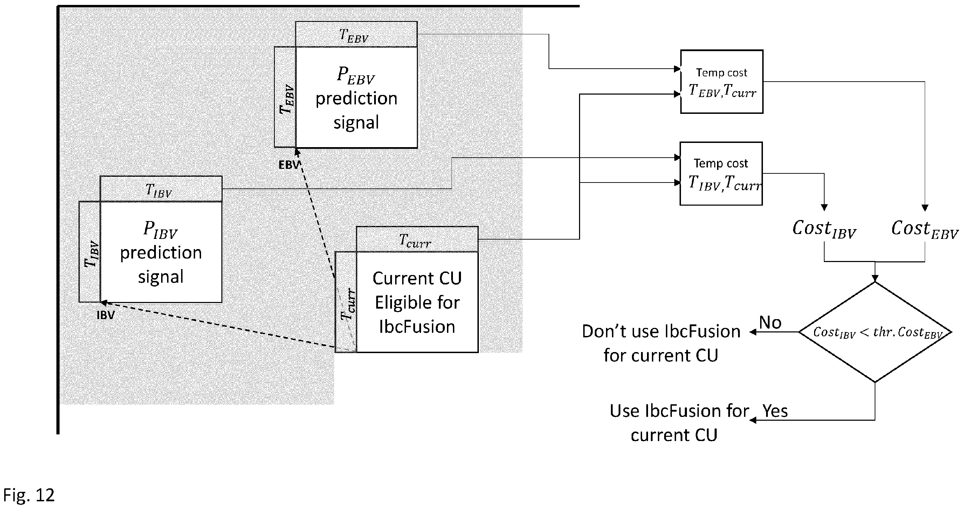

Given an eligible CU, the use of IbcFusion method can be either explicit or implicit. In the explicit usage of IbcFusion, a flag, called IbcFusionFlag, is signaled for each eligible CU. Alternatively, implicit usage of IbcFusion method determines for each eligible CU whether or not to use IbcFusion based on the information that is available at the decoder side. For example, one can compute cost of the template around the IBV prediction signal and determine whether the IBC prediction can provide a good prediction. Fig. 12 illustrates how to use template costs for comparison in order to determine whether or not use IbcFusion mode on an eligible CU in accordance with embodiments of the present disclosure. Let $T_{EBV}$, $T_{IBV}$ and $T_{curr}$ be templates around the EBV prediction signal, the IBV prediction signal and the current CU, respectively. As is illustrated in Fig. 12, by comparing template costs $Cost_{EBV}$, $Cost_{IBV}$ it may be implicitly decided whether or not to use IbcFusion for an eligible CU. More specifically, if the template costs $Cost_{IBV}$ are less than the template costs $Cost_{EBV}$, e.g., the than a certain threshold set for the template costs $Cost_{EBV}$, IbcFusion may be used.

In accordance with embodiments, the explicit usage of IbcFusion may be signaled for each eligible CU using an sps parameter the *"sps_ibcfusion_enabled_flag"* as illustrated below:

| | Descriptor |
|---|---|
| ... | |
| sps_i sp_enabled_flag | u(1) |
| sps_mrl_enabled_flag | u(1) |
| sps_mip_enabled_flag | u(1) |
| **sps_ibcfusion_enabled_flag** | **u(1)** |
| ... | |
| | |

In accordance with embodiments, the coding unit syntax may be modified as follows to indicate the usage OBIC modes for each CU using an sps parameter *"intra_ibcitmpfusion_flag"*.

| if( CuPredMode[ chType ][ x0 ][ y0 ] = = MODE_INTRA { | Descriptor |
|---|---|
| ... | |
| if( sps_ibc_enabled_flag) | |
| **intra_ibcitmpfusion_flag** | **ae(v)** |
| ... | |
| | |

*Combined candidates list of EBV and IBV*

In accordance with embodiments, for obtaining the final prediction of a block a prediction fusion may done by combining an EBV-based prediction (i.e., primary prediction) with a secondary prediction where the secondary prediction is determined implicitly and it may be an IBV-based prediction, or it may be another EBV-based prediction. In case of an EBV-based prediction, the EBV is associated with another block's explicit signaling. Therefore, a current block may simply derive it with no signaling cost (hence, implicit for current CU).

For this, the EBV-based primary prediction is obtained by using the signaled BV indicator of the EBV prediction in the bitstream for current block.

The secondary prediction may be selected from a list of candidates that include both EBV-based and IBV-based predictions. This list is called combined list, hereafter. For example, N EBV-based candidates may be added to the list using the existing AMVP and merge modes for IBC; and M IBV-based candidates may be added to the list using the existing intraTMP search mechanisms. A pruning process may be applied when or after creating the combined list in order to avoid including duplicate predictions, or predictions that are same as the primary prediction. As mentioned earlier, in this approach the N EBV-based candidates are coming from other blocks (e.g. neighbors), hence, their explicit BV signaling imposes no additional rate cost on current block.

The combined list candidates are then sorted for example from best to worst predictions. Then the best prediction from the sorted combined list may be selected and used as secondary prediction to be fused with the primary prediction.

The sorting mechanism for the combined list may be done in various ways.

In accordance with embodiments, the list is sorted based on their template cost compared to the template of the current block.

In accordance with other embodiments, the combined list candidates may be sorted based on their similarity to the primary prediction. In this case, the primary prediction is used as reference and the costs of the combined list candidates are calculated accordingly.

In both cases, the cost metric may be any existing distortion metrics such as SAD, SSE or SATD.

In accordance with further embodiments, the sorting mechanism of the combined list candidates may be done by other means. For example, the Virtual IPM (VIPM) of the candidates may be calculated and the candidates are sorted based on the similarity of the VIPM of each candidate and VIPM of the primary prediction.

Thus, has been described above, in accordance with embodiments of the present disclosure provide or introduce an intra coding mode called IbcFusion, in which at least one Explicit BV (EBV) and at least one Implicit BV (IBV) are obtained. Then, by applying a fusion on the corresponding prediction signals of the EBV and IBV, a fusion prediction signal is obtained to be used for block prediction.

In accordance with embodiments, the EBV is obtained from the Intra Block Copy (IBC) tool, via its explicit BV signaling. In other words, a current block is coded as IBC which requires explicit signaling of a BV.

In accordance with embodiments, the IBV is computed at the decoder side based on texture analysis of already-reconstructed texture in the same frame. In such embodiments, a set of potential IBV candidates are analyzed. For each potential candidate, a metric is computed to determine whether or not the candidate are to be used as IBV candidates.

In accordance with embodiments, the IBV is obtained by calling the texture analysis algorithm of the IntraTmp tool to provide a set of IBV candidates by computing template cost around current block and potential IBV candidates.

In accordance with embodiments, the IBV is obtained by computing Virtual IPM (VIPM) on a prediction signal associated to different potential BV candidates. For each potential BV candidate, the computed VIPM is compared against a VIPM that is computed on the EBV prediction signal.

In accordance with embodiments, the IBV is obtained by computing a metric of distortion between the prediction signal associated to different potential BV candidates at one hand, and EBV prediction signal at the other hand.

In accordance with embodiments, the IBV is obtained by combining at least two of above methods of obtaining IBV. For instance, one can first compute a list of potential IBV candidates by calling the texture analysis of IntraTmp. Then, one compares the VIPM of the prediction signal of those potential IBV candidates against the VIPM of the EBV prediction signal, and excludes candidates with large differences.

In accordance with embodiments, a constraint is applied to the difference between a potential IBV and the EBV. For instance, if the Euclidean distance between a potential IBV and the EBV is above a threshold, it is excluded from the rest of the IbcFusion process.

In accordance with embodiments, the fusion step of the IbcFusion algorithm uses constant weights when fusing EBV prediction signal and IBV prediction signal. This means that the same weights are applied for all blocks using IbcFusion.

In accordance with embodiments, fusion weights are adaptively determined for each IbcFusion block. This adaptation can either be explicit (e.g., signaling weights) or implicit (e.g., deriving weights from available information).

In accordance with embodiments, adaptive fusion weights at the block level are computed based on the template cost.

In accordance with embodiments, adaptive fusion weights at the block level are computed based on a similarity metric between the IBV prediction signal and the EBV prediction signal.

In accordance with embodiments, the fusion step of the IbcFusion algorithm uses at least one LM model solver on the templates to determine how the prediction signals are fused.

In accordance with embodiments, a subset of all coded blocks are eligible to use IbcFusion. For instance, certain block sizes are considered eligible.

In accordance with embodiments, for each block that is eligible to IbcFusion, a flag is explicitly signaled in the bitstream to indicate whether IbcFusion is used on that block.

In accordance with embodiments, for each block that is eligible to IbcFusion, a flag is implicitly derived based on information that is available at the decoder side (e.g. texture of previously coded blocks) to indicate whether IbcFusion is used on that block.

In accordance with embodiments, first the EBV prediction signal is obtained. Then, in order to obtain the IBV prediction signal, a list of BV candidates, named combined list, is computed. This list can contain IBV candidates, and/or EBV candidates whose explicit BVs are associated with previously coded blocks (hence, nothing to parse for current block). This list might be sorted based on similarity to the prediction of the EBV prediction signal of current IbcFusion block.

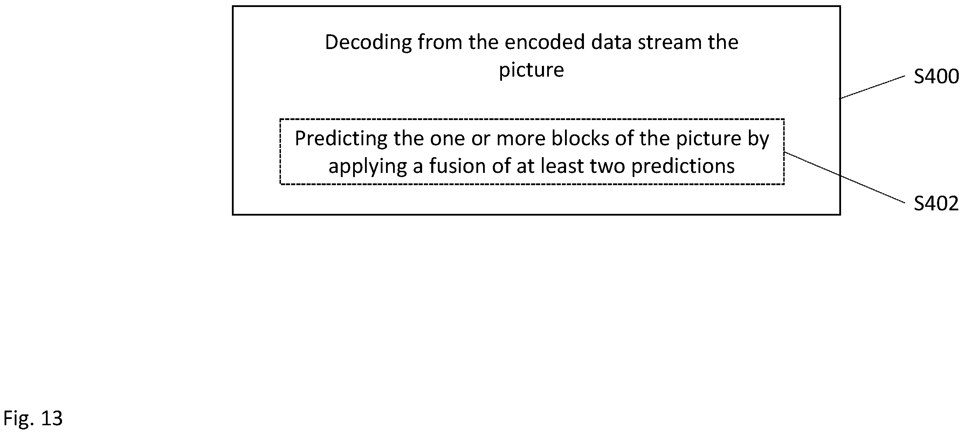

Fig. 13 illustrates a flow diagram of a method for decoding an encoded data stream, the encoded data stream including data representing a picture. The method includes the following:

S400: Decoding from the encoded data stream the picture.

Decoding the picture comprises predicting S402 one or more blocks of a picture by applying a fusion of at least two predictions. The at least two predictions include a prediction using intra block copy, IBC, and a prediction using Intra template matching prediction, IntraTmp.

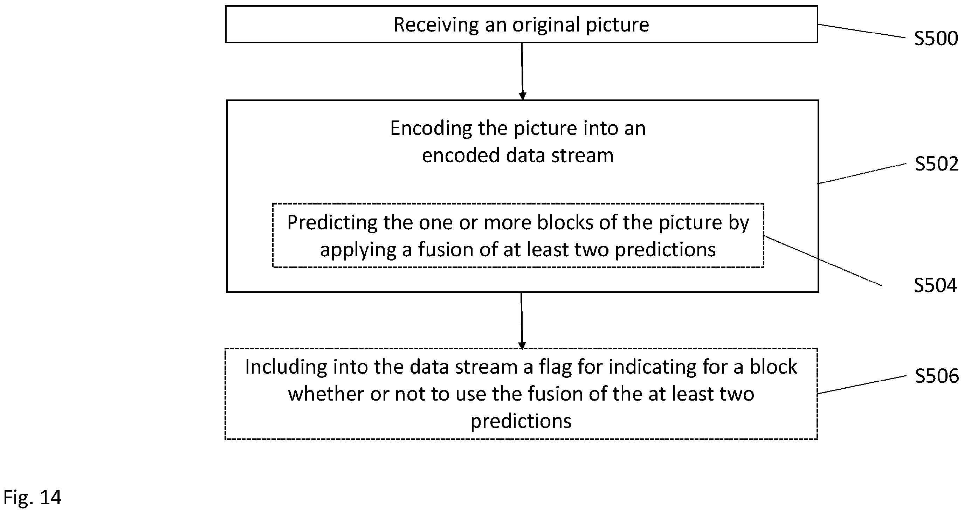

Fig. 14 illustrates a flow diagram of a method for encoding a picture into an encoded data stream. The encoded data stream includes data representing the picture and the method includes the following:

S500: Receiving an original picture.
S502: Encoding the picture into the encoded data stream.

Encoding the picture comprises predicting S504 one or more blocks of a picture by applying a fusion of at least two predictions. The at least two predictions include a prediction using intra block copy, IBC, and a prediction using Intra template matching prediction, IntraTmp.

Optionally, the method includes including S506 into the data stream a flag for indicating for a block whether or not to use the fusion of the at least two predictions.

Further embodiments

So far, the inventive concept has been described with reference to aspects and embodiments concerning methods of predicting one or more blocks of a picture, for decoding and for encoding. In accordance with further embodiments, the present disclosure also provides an apparatus of predicting one or more blocks of a picture as well as encoders/decoders including such an apparatus.

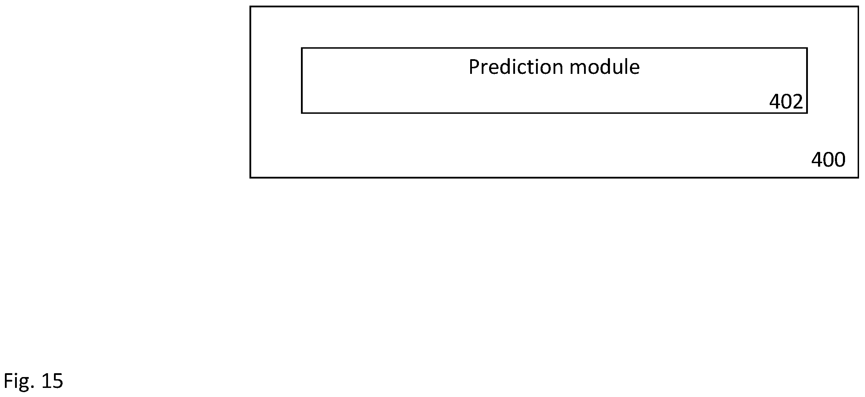

Fig. 15 illustrates a block diagram of an apparatus of predicting one or more blocks of a picture in accordance with embodiments of the present disclosure. The apparatus 400 includes the following modules:

402: A prediction module configured to operate in accordance with embodiments of the present disclosure so as to predict one or more blocks of the picture by applying a fusion of at least two predictions. The at least two predictions include a prediction using intra block copy, IBC, and/or a prediction using Intra template matching prediction, IntraTmp.

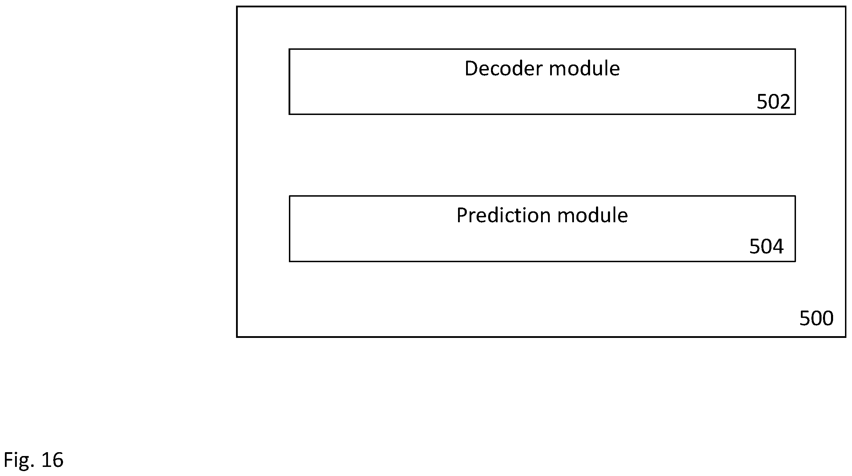

Fig. 16 illustrates a block diagram of a decoder for decoding an encoded data stream in accordance with embodiments of the present disclosure. The encoded data stream includes data representing a picture. The decoder 500 includes the following modules:

502: A decoder module configured to decode from the encoded data stream the picture.
504: A prediction module, e.g., a prediction module 170 as depicted in Fig. 2. The prediction module 502 is configured to operate in accordance with embodiments of the present disclosure so as to predict one or more blocks of the picture by applying a fusion of at least two predictions. The at least two predictions include a prediction using intra block copy, IBC, and/or a prediction using Intra template matching prediction, IntraTmp. For example, the prediction module 502 includes an apparatus as described with reference to Fig. 15.

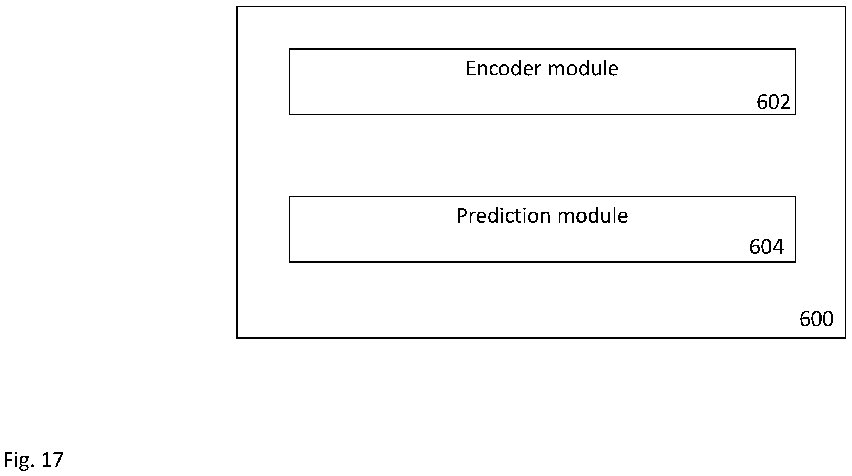

Fig. 17 illustrates a block diagram of an encoder for encoding a picture into an encoded data stream in accordance with embodiments of the present disclosure. The encoded data stream includes data representing the picture. The encoder 600 includes the following modules:

602: An encoder module configured to receive the original picture and to encode the picture into the encoded data stream.
604: A prediction module, e.g., a prediction module 124 as depicted in Fig. 1. The prediction module 602 is configured to operate in accordance with embodiments of the present disclosure so as to predict one or more blocks of the picture by applying a fusion of at least two predictions. The at least two predictions include a prediction using intra block copy, IBC, and/or a prediction using Intra template matching prediction, IntraTmp. For example, the prediction module 502 includes an apparatus as described with reference to Fig. 15.

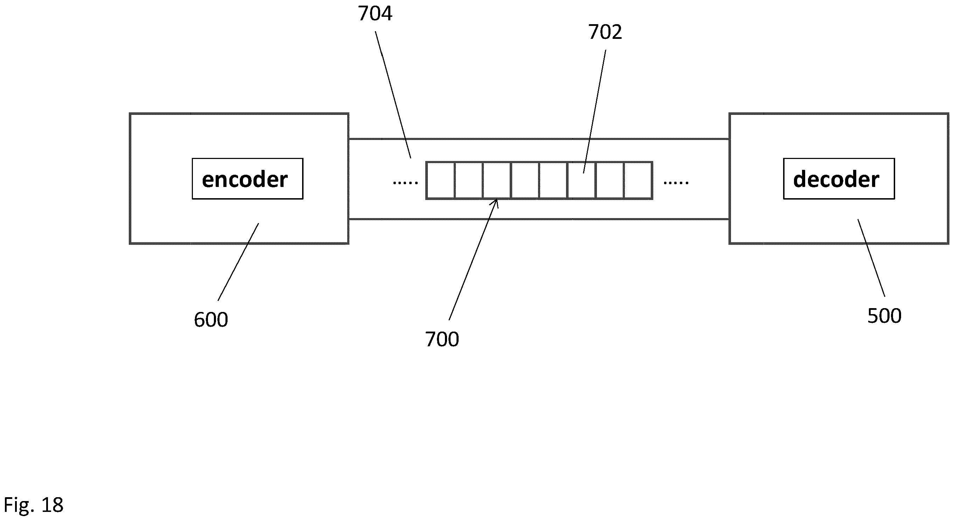

Fig. 18 illustrates a data stream 700 in accordance with embodiments of the present disclosure, which has encoded thereinto a picture and information data associated with the picture. For example, the data stream or bitstream 700 may be provided by an encoder 600 that performs the inventive method for encoding the picture into the data stream 700. The data stream 700 is transmitted to a decoder 500 via a wired or wireless transmission medium 704, like cable or a radio link, and the decoder 500 decodes from the data stream 700 the picture. The data stream includes a flag 702, which is encoded into the data stream by the encoder 600. The flag indicates for one or more blocks of the picture whether or not to predict the one or more blocks of the picture in accordance with embodiments of the present disclosure by applying a fusion of at least two predictions at the decoder side. The at least two predictions include a prediction using intra block copy, IBC, and/or a prediction using Intra template matching prediction, IntraTmp.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

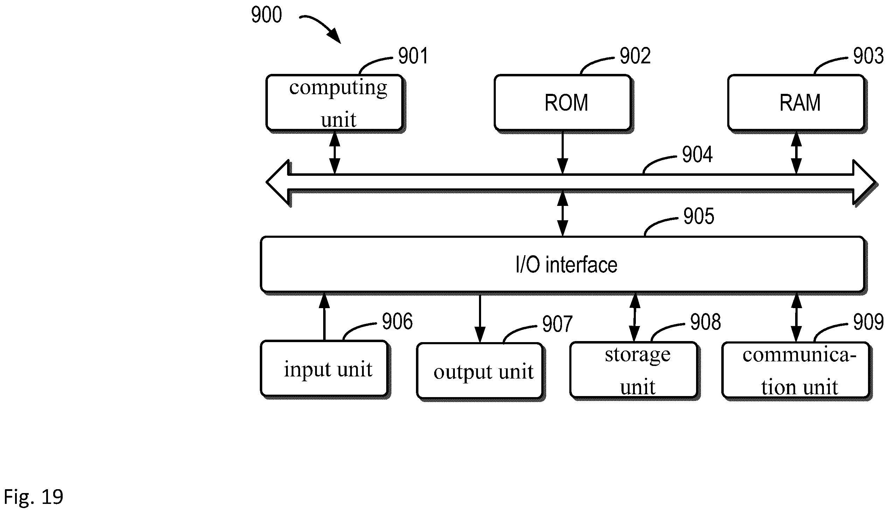

Fig. 19 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

**References**

[1] H.264: Advanced video coding for generic audio-visual services, https://www.itu.int/rec/T-REC-H.264-202108-P/en

[2] H.265: High efficiency video coding, https://www.itu.int/rec/T-REC-H.265-202108-P/en

[3] H.266: Versatile video coding, https://www.itu.int/rec/T-REC-H.266-202008-I/en

[4] AV1 Bitstream & Decoding Process Specification, http://aomedia.org/av1/specification/

[5] Algorithm description of Enhanced Compression Model 12 (ECM 12), document JVET-AG2025, https://jvet-experts.org/doc_end_user/documents/33_Teleconference/wg11/JVET-AG2025-v1.zip

**Claims**

1. A method of predicting one or more blocks of a picture, the method comprising:
   predicting the one or more blocks of the picture by applying a fusion of at least two predictions, wherein the at least two predictions comprise a prediction using intra block copy, IBC, and/or a prediction using Intra template matching prediction, IntraTmp.

2. The method of claim 1, wherein the predicting comprises:

   - obtaining at least one Explicit Block Vector, EBV, prediction signal,
   - computing at least one Implicit Block Vector, IBV, prediction signal, and
   - applying a fusion of the at least one EVB prediction signal with the at least one IBV prediction signal for obtaining at least one fusion prediction signal.

3. The method of claim 1 or 2,

   wherein the at least one IBV prediction signal is computed using an IntraTmp process, and
   wherein using the IntraTmp process for computing the at least one IBV prediction signal comprises selecting an IntraTmp candidate as the IBV prediction signal having a highest similarity

   - with a template around a current block, or
   - with the EBV prediction signal.

4. The method of claim 3, wherein selecting the IntraTmp candidate as the IBV prediction signal having a highest similarity with the EBV prediction signal comprises:

   - performing a search on a reconstructed area of the picture, and
   - for each potential IBV prediction signal,

     o compare a metric of similarity between the EBV prediction signal and the potential IBV prediction signal,

o selecting the IBV prediction signal having the highest similarity.

**5.** The method of claim 1 or 2,

wherein the at least one IBV prediction signal is computed using an IntraTmp process, and
wherein using the IntraTmp process for computing the at least one IBV prediction signal comprises:

- selecting from a set of IntraTmp candidates, a subset of IntraTmp candidates having template costs below a certain threshold, and
- selecting, from the subset of IntraTmp candidates, the IntraTmp candidate as the IBV prediction signal having the highest metric of similarity with the EBV prediction signal.

**6.** The method of any one of the preceding claims, wherein applying the fusion of the at least two predictions comprises:

- linear weighting the at least two predictions at a block level to generate the at least one fusion prediction signal.

**7.** The method of claim 6, wherein the at least two predictions comprise the EBV prediction signal and the IBV prediction signal, and each pixel value of the at least one fusion prediction signal is computed as follows:

$$P_F^{i,j} = \omega_{IBV} P_{IBV}^{i,j} + \omega_{EBV} P_{EBV}^{i,j}$$

where

$P_F^{i,j}$ pixel value of the at least one fusion prediction signal,
$\omega_{IBV}$ fusion weight for the IBV prediction signal,

$P_{IBV}^{i,j}$ IBV prediction signal,
$\omega_{EBV}$ fusion weight for the EBV prediction signal,

$P_{EBV}^{i,j}$ EBV prediction signal,
$i, j$ i and j are horizontal and vertical position of a pixel within the block that is to be predicted by fusion.

**8.** The method of claim 6 or 7,

wherein the fusion weights for the EBV prediction signal and for the IBV prediction signal are different and constant weights which are used for all blocks, or are adapted for each block, and
wherein, optionally, the fusion weights are derived as follows:

$$\omega_{EBV} = 1 - \frac{Cost_{EBV}}{Cost_{EBV} + COST_{IBV}}$$

$$\omega_{IBV} = 1 - \frac{Cost_{IBV}}{Cost_{EBV} + COST_{IBV}}$$

where

$Cost_{EBV}$ template costs based on costs of the template $T_{EBV}$ around the EBV prediction signal and the template $T_{curr}$ around the current block, and
$Cost_{IBV}$ template costs based on costs of the template $T_{IBV}$ around the IBV prediction and the template $T_{curr}$ around the current block.

**9.** The method of any one claims 1 to 5, wherein applying the fusion of the at least two predictions comprises:

- using a Linear Model, LM, solver to generate the at least one fusion prediction signal.

**10.** The method of any one of the preceding claims,

wherein an eligibility of the fusion of the at least two predictions for a certain block of the picture depends on one or more criteria, and
wherein, optionally, the one or more criteria comprise one of more of the following:

- the block is IBC-coded,
- the block has a certain block size,
- a joint usage of IBC and of other coding tools such as LIC or bi-prediction or CIIP, limits the eligibility.

**11.** The method of claim 1,

wherein the predicting the one or more blocks of the picture by applying a fusion of at least two predictions comprises:

- combining a primary prediction with a secondary prediction, where the secondary prediction is determined implicitly, and

wherein the primary prediction comprises an Explicit Block Vector, EBV, based prediction obtained, e.g., by using a signaled BV indicator of an EBV prediction in the bitstream for the current block, and the secondary prediction comprises an Implicit Block Vector, IBV, based prediction or another EBV-based prediction.

**12.** The method of any one of claims 35 to 38,

wherein the secondary prediction is selected from a list of candidates that includes both EBV-based predictions and IBV-based predictions, and
wherein the list includes

- N EBV-based candidates obtained using *Advanced Motion Vector Prediction,* AMVP, and merge modes for IBC; and
- M IBV-based candidates obtained using an intraTMP search mechanisms.

**13.** A non-transitory computer-readable storage medium comprising instructions which, when executed by a computer, cause the computer to carry out the method of any one of the preceding claims.

**14.** An apparatus of predicting one or more blocks of a picture, the apparatus comprising:
a prediction module configured to predict the one or more blocks of the picture by applying a fusion of at least two predictions, wherein the at least two predictions comprise a prediction using intra block copy, IBC, and/or a prediction using Intra template matching prediction, IntraTmp.

**15.** A data stream having encoded thereinto a picture, wherein the data stream comprises:
a flag, the flag indicating for one or more blocks of the picture whether or not to predict the one or more blocks of the picture by applying a fusion of at least two predictions at the decoder side, wherein the at least two predictions comprise a prediction using intra block copy, IBC, and/or a prediction using Intra template matching prediction, IntraTmp.

Fig. 1

Fig. 2

EP 4 642 026 A1

(A)  302    300

(B)  302    300

(C)  302    300

(D)  302    300

Fig. 3

Fig. 4

Fig. 5

Predicting the one or more blocks of the picture by applying a fusion of at least two predictions... ——— S100

Fig. 6

EP 4 642 026 A1

Start

↓

Obtain from bitstream, an Explicit
BV (EBV) prediction signal from
EBV of IBC mode — S200

↓

Compute an Implicit BV (IBV)
prediction signal — S202

↓

Obtain the fusion prediction signal
by applying a fusion on the EBV
and IBV prediction signals — S204

↓

End

Fig. 7

Start

Obtain from bitstream, an Explicit
BV (EBV) prediction signal from
EBV of IBC mode — S300

Compute an Implicit BV (IBV)
prediction signal

Compute an Explicit BV (EBV)
prediction signal

S302a

S302b

Obtain the fusion prediction signal
by applyig a fusion on the EBV and
IBV prediction signals — S304

End

Fig. 8

<Thr2

<Thr1

Similarity
$EBV, IBV1$

Similarity
$EBV, IBV2$

No — Don't use IBV-2

Yes — Use IBV-2

No — Don't use IBV-1

Yes — Use IBV-1

$P_{EBV}$ prediction signal

EBV

Current CU Eligible for IbcFusion

$P_{IBV}$ prediction signal

$P_{IBV}$ prediction signal

IBV-1

IBV-2

Fig. 9

Fig. 10

Fig. 11

Fig. 12

EP 4 642 026 A1

Decoding from the encoded data stream the
picture

S400

Predicting the one or more blocks of the picture by
applying a fusion of at least two predictions

S402

Fig. 13

```
┌─────────────────────────────────────────────────────┐
│              Receiving an original picture            │────── S500
└─────────────────────────────────────────────────────┘
                            │
                            ▼
┌─────────────────────────────────────────────────────┐
│              Encoding the picture into an             │
│                 encoded data stream                   │────── S502
│  ┌─────────────────────────────────────────────────┐ │
│  │ Predicting the one or more blocks of the picture by│ │
│  │  applying a fusion of at least two predictions     │ │
│  └─────────────────────────────────────────────────┘ │────── S504
└─────────────────────────────────────────────────────┘
                            │
                            ▼
┌─────────────────────────────────────────────────────┐
│ Including into the data stream a flag for indicating for a block│
│    whether or not to use the fusion of the at least two │────── S506
│                    predictions                        │
└─────────────────────────────────────────────────────┘
```

Fig. 14

EP 4 642 026 A1

Prediction module

402

400

Fig. 15

EP 4 642 026 A1

Decoder module

502

Prediction module

504

500

Fig. 16

```
┌─────────────────────────────────────────────────┐
│                                                 │
│   ┌─────────────────────────────────────────┐   │
│   │          Encoder module                 │   │
│   │                                  602    │   │
│   └─────────────────────────────────────────┘   │
│                                                 │
│                                                 │
│   ┌─────────────────────────────────────────┐   │
│   │          Prediction module              │   │
│   │                                  604    │   │
│   └─────────────────────────────────────────┘   │
│                                                 │
│                                          600    │
└─────────────────────────────────────────────────┘
```

Fig. 17

Fig. 18

Fig. 19

Europäisches
Patentamt
European
Patent Office
Office européen
des brevets

# EUROPEAN SEARCH REPORT

**Application Number**

EP 24 17 2741

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/078550 A1 (DOUYIN VISION BEIJING CO LTD [CN]; BYTEDANCE INC [US]) 18 April 2024 (2024-04-18) * paragraphs [0005], [0398], [0423] - [0437], [0445] - [0450], [0456] - [0469], [0477] - [0492], [0537], [0543] - [0545] * | 1-15 | INV. H04N19/105 H04N19/593 H04N19/52 H04N19/176 |
| X | WO 2023/046127 A1 (BEIJING BYTEDANCE NETWORK TECH CO LTD [CN]; BYTEDANCE INC [US]) 30 March 2023 (2023-03-30) * abstract * * page 118 - page 121 * | 1,13-15 | |
| X | EP 4 304 171 A1 (BEIJING XIAOMI MOBILE SOFTWARE CO LTD [CN]) 10 January 2024 (2024-01-10) * paragraphs [0070] - [0073], [0095], [0096], [0170] - [0180]; figures 10,11 * | 1,13-15 | |
| A | COBAN M ET AL: "Algorithm description of Enhanced Compression Model 12 (ECM 12)", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), , no. JVET-AG2025 ; m66954 29 March 2024 (2024-03-29), XP030316747, Retrieved from the Internet: URL:https://jvet-experts.org/doc_end_user/documents/33_Teleconference/wg11/JVET-AG2025-v1.zip JVET-AG2025-v1.docx [retrieved on 2024-03-29] * the whole document * | 1-15 | **TECHNICAL FIELDS SEARCHED (IPC)** H04N |

-/--

The present search report has been drawn up for all claims

| Place of search | Date of completion of the search | Examiner |
|---|---|---|
| Munich | 13 September 2024 | Cakiroglu Garton, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 17 2741

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | J-L LIN (QUALCOMM) ET AL: "EE2-1.9: Intra TMP fusion probing", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), , no. JVET-AG0118 16 January 2024 (2024-01-16), XP030314024, Retrieved from the Internet: URL:https://jvet-experts.org/doc_end_user/ documents/33_Teleconference/wg11/JVET-AG01 18-v2.zip JVET-AG0118-v2/JVET-AG0118-v2.docx [retrieved on 2024-01-16] * the whole document * ----- | 1-15 | |
| A | MA (KWAI) C ET AL: "Non-EE2: Combined intra block copy and intra mode", 28. JVET MEETING; 20221021 - 20221028; MAINZ; (THE JOINT VIDEO EXPLORATION TEAM OF ISO/IEC JTC1/SC29/WG11 AND ITU-T SG.16 ), , no. JVET-AB0191 ; m60979 26 October 2022 (2022-10-26), XP030304812, Retrieved from the Internet: URL:https://jvet-experts.org/doc_end_user/ documents/28_Mainz/wg11/JVET-AB0191-v4.zip JVET-AB0191.docx [retrieved on 2022-10-26] * the whole document * ----- | 1-15 | TECHNICAL FIELDS SEARCHED (IPC) |

The present search report has been drawn up for all claims

| Place of search | Date of completion of the search | Examiner |
|---|---|---|
| Munich | 13 September 2024 | Cakiroglu Garton, S |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

............................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 17 2741

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2024

| Patent document cited in search report | Publication date | Patent family member(s) | | Publication date |
|---|---|---|---|---|
| WO 2024078550 A1 | 18-04-2024 | NONE | | |
| WO 2023046127 A1 | 30-03-2023 | CN | 118355659 A | 16-07-2024 |
| | | US | 2024275941 A1 | 15-08-2024 |
| | | WO | 2023046127 A1 | 30-03-2023 |
| EP 4304171 A1 | 10-01-2024 | EP | 4304171 A1 | 10-01-2024 |
| | | WO | 2024007695 A1 | 11-01-2024 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *JVET-AG2025*, https://jvet-experts.org/doc_end_user/documents/33_Teleconference/wg11/JVET-AG2025-v1.zip